# DEMANDE DE BREVET EUROPEEN

(11) **EP 4 847 572 A1**
(43) Date de publication de la demande: **02.12.2026**
(21) Numéro de dépôt: 26180517.0
(22) Date de dépôt: 22.05.2026
(51) Int. Cl.: C09D 11/101, C09D 11/03, C09D 11/36, C09D 11/322

(54) **COMPOSITIONS D ENCRES DURCISSABLES PAR RAYONNEMENTS UV OU PAR RAYONNEMENTS DE FAISCEAUX D ELECTRONS**

(30) Priorité: 27.05.2025 FR 2505670
(71) Demandeur: Airbus Operations (S.A.S.), 31300 Toulouse (FR); Airbus Operations Ltd, Filton, Bristol BS34 7PA (GB); Airbus Operations GmbH, 21129 Hamburg (DE)
(72) Inventeur: MANNEKENS, Els, 2650 EDEGEM (BE); MAHLER, Fabian, 21129 HAMBOURG (DE); BÜRGY, Olivier, 31060 TOULOUSE (FR); LELEU, Samuel, 31060 TOULOUSE (FR); RZESZUTEK, Katarzyna, BRISTOL, BS34 7PA (GB)
(74) Mandataire: Cabinet Le Guen Maillet

(57) **Abrégé**

La présente invention concerne une composition d'encre durcissable par rayonnements UV ou par rayonnements de faisceaux d'électrons, en particulier adaptée à la décoration des surfaces extérieures d'un aéronef, et se caractérise en ce qu'elle comprend :
- entre 20 et 50 % de 4-hydroxybutyl acrylate,
- entre 20 et 50 % d'un diluant réactif choisi parmi l'acrylate d'isobornyle, le diacrylate tricyclodécane diméthanol, le 2-éthylhexyl acrylate ou l'un de leurs mélanges,
- entre 0,5 et 2 % d'au moins un tensioactif à base de silicone,
- jusqu'à 20% d'au moins un photoinitiateur,
- jusqu'à 15 % de pigments,
en poids par rapport au poids total de la composition.

## Description

### DOMAINE TECHNIQUE

La présente invention concerne une composition d'encre durcissable par rayonnements UV ou par rayonnements de faisceaux d'électrons, en particulier adaptée à la décoration des surfaces extérieures d'un aéronef, telles que le fuselage, les ailes, les nacelles de moteurs et la dérive.

### ÉTAT DE LA TECHNIQUE ANTÉRIEUR

Les surfaces extérieures des aéronefs sont couramment décorées, par exemple au moyen de logos ou de motifs tels que des dessins ou des images. Les décorations sont appliquées sur une couche primaire de peinture, puis recouverte d'une couche de protection. Typiquement, les décorations sont réalisées par application de peintures et nécessitent l'utilisation de pochoirs ou de papiers de masquages ainsi que l'application de plusieurs couches de peintures ou de plusieurs teintes de peintures pour obtenir le résultat attendu. Une telle méthode requiert un temps relativement long avec pour conséquence l'immobilisation de l'aéronef durant sa réalisation. Une autre méthode utilisée est l'application des décorations au moyen de films adhésifs pré-imprimés et appliqués à l'aide de films auto-adhésifs. L'inconvénient de cette méthode est que les films présentent une certaine épaisseur ce qui ajoute du poids à l'avion. En outre, l'application n'est pas aisée et doit être rigoureuse pour éviter les défauts et les décollements. Enfin, les films ont généralement une résistance à l'érosion et une durabilité moindre que celle des peintures. Outre ces méthodes conventionnelles, la technologie d'impression directe (Direct Printing 1.0) a déjà été utilisée. Elle consiste à imprimer directement sur le composant prépeint avec de l'encre à solvant. En raison de la résolution relativement faible de cette technologie à jet d'encre et du spectre de couleurs très limité de l'encre à solvant utilisée, cette technologie présentait plusieurs inconvénients en pratique.

Une alternative à ces méthodes consiste en l'impression des décorations à l'aide de dispositifs à jet d'encres durcissables par rayonnements UV (ultra-violet) ou par rayonnements de faisceaux d'électrons. De telles encres sont composées de monomères liquides, tels que des monomères d'acrylate, qui se polymérisent et durcissent sous l'action de photo-initiateurs.

La réaction est induite par une exposition à la lumière ultraviolette ou à un faisceau d'électrons. Le durcissement est rapide, transformant l'encre en un film polymère solide.

De nombreuses compositions d'encres durcissables par rayonnements UV ou rayonnements de faisceaux d'électrons sont aujourd'hui proposées. Cependant, la formulation d'une encre convenant à son application sur un aéronef doit tenir compte de nombreux facteurs typiques de l'aéronef, en particulier de la nature de la couche de peintures de base et de la couche de vernis protection, ainsi que des conditions climatiques auxquelles sont soumis les aéronefs notamment en vol.

### EXPOSÉ DE L'INVENTION

L'objet de la présente invention est ainsi de proposer des compositions d'encres durcissables par rayonnements UV ou rayonnements de faisceaux d'électrons adaptées à une application sur un aéronef.

Plus précisément un but de la présente invention est de proposer des compositions d'encres durcissables par rayonnements UV ou par rayonnements de faisceaux d'électrons qui soient compatibles avec la composition de la couche de peintures de base et de la couche de vernis protection, généralement toutes deux composées de polyuréthane à base de polyols de polyester et de polyisocyanates, afin de garantir une bonne adhérence avec ces couches entre lesquelles elle se retrouve prise en sandwich.

De telles compositions d'encres devront en outre pouvoir être appliquées sans nécessiter un temps d'immobilisation trop long de l'appareil. En effet, la couche de peinture de base recouvrant un aéronef demande généralement quelques jours pour un séchage complet. Il serait souhaitable de pouvoir procéder à l'impression des décorations seulement quelques heures après l'application de la couche de peinture de base. De même, il serait souhaitable de pouvoir procéder à l'application de la couche de vernis protection rapidement après celle de l'impression des décorations. Ceci nécessite là encore une grande compatibilité entre l'encre et la peinture de base et la couche de protection.

A cet effet, l'invention concerne une composition d'encre durcissable par rayonnements UV ou par rayonnements de faisceaux d'électrons, qui se caractérise en ce qu'elle comprend :
- entre 20 et 50 % de 4-hydroxybutyl acrylate,
- entre 20 et 50 % d'un diluant réactif choisi parmi l'acrylate d'isobornyle, le diacrylate tricyclodécane diméthanol, le 2-éthylhexyl acrylate ou l'un de leurs mélanges,
- entre 0,5 et 2 % d'au moins un tensioactif à base de silicone,
- jusqu'à 20% d'au moins un photoinitiateur,
- jusqu'à 15 % de pigments,
en poids par rapport au poids total de la composition.

La composition selon l'invention se montre tout à fait efficace pour répondre aux objectifs précédemment mentionnés. En particulier, elle présente une bonne compatibilité avec la composition de la peinture de base et la composition du vernis de protection et donc une grande adhérence avec celles-ci. Cette compatibilité rend possible son application sur la peinture de base seulement quelques heures après l'application de celle-ci et ne nécessite donc pas d'attendre son séchage complet. Par ailleurs, la couche de vernis de protection peut être appliquée immédiatement après celle de l'encre selon l'invention sans empêcher le durcissement aux UV ou par faisceaux d'électrons.

Cette grande compatibilité est particulièrement due à la sélection du 4-hydroxybutyl acrylate dont la composition chimique montre une bonne interaction avec les compositions chimiques des peintures de bases et des peintures de vernis. En particulier les groupes hydroxyles du 4-hydroxybutyl acrylate réagissent avec les groupes isocyanates des peintures de bases et des peintures de vernis et des liaisons covalentes s'établissent.

Préférentiellement, la composition comprend entre 25 et 45 %, plus préférentiellement entre 35 et 40%, de 4-hydroxybutyl acrylate, en poids par rapport au poids total de la composition.

Préférentiellement encore, la composition comprend entre 30 et 40 %, plus préférentiellement entre 35 et 40%, de diluant choisi parmi l'acrylate d'isobornyle, le diacrylate tricyclodécane diméthanol, le 2-éthylhexyl acrylate, ou l'un de leurs mélanges, en poids par rapport au poids total de la composition.

Selon un mode de réalisation préféré, le diluant comprend l'acrylate d'isobornyle.

Avantageusement, le tensioactif à base de silicone est un acrylate de silicone ou un polysiloxane polyéther modifié.

Avantageusement, la composition comprend entre 5 et 15 %, d'au moins un photoinitiateur, en poids par rapport au poids total de la composition.

Avantageusement, la composition comprend, de plus, jusqu'à 10%, préférentiellement entre 2 et 6 %, d'au moins un co initateur de polymérisation, en poids par rapport au poids total de la composition.

Préférentiellement, le co initateur de polymérisation est une amine acrylée.

Préférentiellement encore, la composition comprend entre 2 et 10 % de pigments, préférentiellement entre 2 et 6%, en poids par rapport au poids total de la composition.

Avantageusement, la composition comprend, de plus, jusqu'à 2 %, préférentiellement, entre 0,1 et 2 %, d'au moins un inhibiteur de polymérisation, en poids par rapport au poids total de la composition.

Selon un mode de réalisation, la composition comprend, de plus, jusqu'à 15% d'au moins un solvant non réactif, préférentiellement de l'isobutanol, en poids par rapport au poids total de la composition.

### DESCRIPTION DETAILLE DE L'INVENTION

### 4-hydroxybutyl acrylate

Le 4-hydroxybutyl acrylate est un composant essentiel de l'invention. Comme mentionné précédemment, il présente une fonction hydroxyle lui conférant une bonne compatibilité avec les composants polyuréthanes constitutifs des peintures de base et des peintures de vernis de protection appliqués sur les aéronefs et permet une forte adhésion avec celles-ci.

Le 4-hydroxybutyl acrylate présente le numéro CAS 2478-10-6 et est connu sous la référence commerciale 4-HBA (BASF).

Le 4-hydroxybutyl acrylate se trouve dans la composition à une teneur comprise entre 20 et 50 %, préférentiellement entre 25 et 45 %, plus préférentiellement entre 35 et 40 %, en poids par rapport au poids total de la composition

### Diluants réactifs

Les diluants réactifs permettent de diminuer la tension de surface de la composition d'encre selon l'invention et d'agir sur la mouillabilité de la surface d'impression, la compatibilité avec l'ensemble des composants, en particulier les photo-initiateurs et les pigments, l'adhérence et la souplesse du film. Les diluants réactifs sélectionnés dans le cadre de l'invention sont ceux ayant répondus le plus favorablement à ces critères. Les diluants sélectionnés sont dits « réactifs » car ce sont des monomères d'acrylate fonctionnels qui vont participer à la réaction de polymérisation.

Ainsi, les diluants sélectionnés sont, par ordre de préférence, l'acrylate d'isobornyle (référence commerciale IBOA) (N° CAS:5888-33-5) (Arkema), le diacrylate tricyclodécane diméthanol (référence commerciale TCCDA) (N° CAS:42594-17-2), le 2-éthylhexyl acrylate (référence commerciale EHA) (N °CAS:103-11-7) (Rahn). Des mélanges de ces diluants réactifs sont tout à fait envisageables.

Les diluants réactifs se trouvent dans la composition à une teneur comprise entre 20 et 50 %, préférentiellement entre 30 et 40 %, plus préférentiellement entre 35 et 40%, en poids par rapport au poids total de la composition.

Préférentiellement, le ratio entre, d'une part, le 4-Hydroxybutyl Acrylate et, d'autre part, la somme du ou des diluants réactifs est ≥ 1.

Il convient de noter que la composition selon l'invention peut comprendre d'autres monomères d'acrylate, en plus du 4-hydroxybutyl acrylate en mélange avec l'acrylate d'isobornyle, le diacrylate tricyclodécane diméthanol et/ou le 2-éthylhexyl acrylate, mais cela reste optionnel.

### Les tensioactifs à base de silicone

Des agents tensioactifs sont utilisés pour réguler la tension superficielle de la composition, améliorer la mouillabilité et obtenir de bonnes propriétés d'application.

Le, ou les, tensioactifs à base de silicone sont choisis parmi les acrylates de silicone ou les polysiloxanes polyéther modifiés. Les tensioactifs préférés dans le cadre de l'invention sont ceux désignés par les références commerciales TEGORAD 2300 (Evonik Industries AG.), TEGORAD 2100 (Goldschmidt Chemical Corp.), BYKUV 333 (BYK Chemie) et BYKUV 3510 (BYK Chemie).

Les tensioactifs se trouvent dans la composition à une teneur comprise entre 0,5 et 2 %, en poids par rapport au poids total de la composition. Il convient de noter que les quantités de tensioactifs utilisées sont adaptées à l'application de couches ultérieures, telles que la couche de vernis de protection.

### Les photo-initiateurs

Les photo-initiateurs sont utilisés de manière connue pour initier, sous exposition aux UV, la croissance des chaînes de polymères à partir du, ou des, monomères d'acrylate.

Les photo-initiateurs peuvent être de type I ou de type II.

Les photo-initiateurs de type I peuvent être notamment choisis parmi la famille des acétophénones, alkoxyacétophénones et dérivés ; de la famille des hydroxyacétophénones et dérivés ; de la famille des alkylaminoacétophénones et dérivés ; de la famille des éthers de benzoïne et dérivés ; de la famille des oxydes de phosphines et dérivés.

Plus préférentiellement les photo-initiateurs de type I sont l'oxyde de diphényle-(2,4,6-triméthylbenzoyle) phosphine (références commerciale TPO (BASF)), l'oxyde d'éthyle-(2,4,6-triméthylbenzoyle) phénylphosphine (référence commerciale TPO-L (IGM Resins BV.)) ou l'oxyde de bis-(2,6-diméthoxybenzoyle)-2,4,4-triméthylphényle phosphine (référence commerciale BAPO (BASF)) ou l'un de leur mélange.

Les photo-initiateurs de type II peuvent être notamment choisis parmi la famille des benzophénones et dérivés ; la famille des thioxanthones et dérivés telles que la 2,4-diéthylthioxanthone ; la famille des quinones et dérivés ; la famille des esters de benzoyle formate et dérivés ; la famille des cétones de dibenzylidène et dérivés ; la famille des coumarines.

Plus préférentiellement, le photo-initiateur de type II est la 2,4-diéthylthioxanthone (réference commerciale DETX (Rahn)).

Un seul photo-initiateur peut être utilisé, cependant pour maximiser l'absorption de lumière UV, on utilise de préférence une combinaison de photo-initiateurs de type I et de type II.

Les photo-initiateurs se trouvent dans la composition à une teneur jusqu'à 20%, en poids, préférentiellement entre 5 et 15 %, en poids par rapport au poids total de la composition.

### Co-initiateur de polymérisation

De manière avantageuse, la composition selon l'invention comprend un, ou plusieurs, co-initiateur de polymérisation, ou photo-synergiste, qui favorise l'amorçage de la polymérisation et va améliorer les performances de durcissement et de l'adhérence du film. Avantageusement, il s'agit d'un composé à base d'amine, autrement connue sous le terme de synergiste d'amine, de préférence une amine acrylée.

Parmi les amines acrylées, on peut citer, par exemple ceux correspondant à la référence commerciale : Génomère 5271 (Rahn), Génomère 5142 (Rahn), Génomère 5161 (Rahn), Génomère 5275 (Rahn), Ebecryl P115 (Allnex), Ebecryl 7100 (Allnex), Ebecryl 80 (Allnex), Ebecryl 81 (Allnex), Ebecryl 83 (Allnex), Ebecryl 85 (Allnex), Ebecryl 880 (Allnex), Ebecryl LEO10551 (Allnex), Ebecryl LEO10552 (Allnex), Ebecryl LEO10553 (Allnex), Ebecryl 3600 (Allnex), Ebecryl 3703 (Allnex).

Le, ou les, co-initiateur de polymérisation se trouvent dans la composition à une teneur jusqu'à 10 %, en poids, préférentiellement entre 2 et 6 %, en poids par rapport au poids total de la composition.

### Inhibiteurs de polymérisation

De manière avantageuse, la composition selon l'invention comprend un, ou plusieurs inhibiteurs de polymérisation. Ceux-ci sont utilisés pour empêcher l'autopolymérisation des formulations d'encre pendant le stockage, et ainsi prolonger la période de stockage des compositions d'encre selon l'invention.

Les inhibiteurs de polymérisation appropriés sont par exemple des composés phénoliques, des composés quinoniques, des composés aminés, des composés nitro, des composés oximes et des composés soufrés.

Les inhibiteurs appropriés sont, par exemple, ceux correspondant à la référence commerciale : Sumilizer GA-80, Sumilize GM et Sumilizer GS (Sumitomo Chemical Co. Ltd.) ; Genorad 16, Genorad 18 et Genorad 20 (Rahn AG) ; Irgastab UV10, Irgastab UV22, Tinuvin 460 (BASF).

Étant donné qu'une quantité excessive des inhibiteurs de polymérisation peut diminuer ou empêcher la polymérisation de l'encre, leur quantité doit idéalement être inférieure à 2 % en poids total de l'encre, préférentiellement entre 0,1 et 2%.

### Pigments

La composition d'encre selon l'invention contient des pigments. Les pigments sont choisis en fonction des couleurs et teintes souhaitées. Ceux-ci peuvent être noirs, cyans, magentas, jaunes, rouges, oranges, violets, bleus, verts, bruns, etc. De nombreuses références commerciales sont accessibles.

Préférentiellement, les pigments se trouvent initialement en dispersion dans un liquide, ou dans un milieu de dispersion.

Préférentiellement, le milieu de dispersion comprend du 4-hydroxybutyl acrylate seul, ou en mélange avec de l'acrylate d'isobornyle et, ou, tout monomère d'acrylique. L'agent dispersant utilisé pour stabiliser les pigments dans le milieu de dispersion peut être n'importe lequel des agents dispersants connus tels que ceux correspondant à la série commerciale BYKJET, tel que BYKJET 9150, BYKJET 9151, BYKJET 9152, ou la série commerciale SOLSPERSE, tel que SOLSPERSE 35000, SOLSPERSE 71000, etc.

Il convient de noter que les particules de pigments doivent être suffisamment petites pour permettre l'utilisation de l'encre dans le dispositif d'impression à jet d'encre, notamment au niveau des buses d'éjection. La taille moyenne des particules de pigments devrait être comprise entre 0,02 µm et 2 µm, préférentiellement entre 0,02 µm et 0,5 µm.

Les pigments se trouvent dans la composition à une teneur jusqu'à 15 %, en poids, par rapport au poids total de la composition, préférentiellement entre 2 et 10 %, plus préférentiellement entre 2 et 6 %.

### Solvants

La composition selon l'invention peut comprendre des solvants, autres que l'un des diluants réactifs cités précédemment.

Des exemples de solvants utilisés dans la présente invention comprennent divers solvants organiques, notamment des alcools tels que l'éthanol, le propanol, le butanol, l'alcool isopropylique, l'alcool isobutylique et l'alcool diacétonique, en particulier l'alcool isobutylique.

La composition peut contenir jusqu'à 15% de solvants, en poids, par rapport au poids total de la composition.

Préférentiellement, la composition ne comprend pas de tels solvants.

### Composants additionnels

La composition d'encre selon l'invention peut, optionnellement, comprendre d'autres composants que ceux décrits ci-dessus, tels que des conservateurs, des antioxydants, des correcteurs de pH, etc.

La quantité de composants additionnels peut ainsi s'étendre jusqu'à 3%, en poids par rapport au poids total de la composition.

Préférentiellement, la composition ne comprend pas de composants additionnels.

### Procédé de fabrication

La composition d'encre selon l'invention peut être préparée par toute méthode connue de l'homme du métier. Typiquement, les composants décrits ci-dessus sont mélangés dans un récipient équipé d'un agitateur. Au besoin, la composition peut être filtrée.

Les caractéristiques des compositions selon des modes préférés de l'invention sont résumées dans le tableau 1 ci-dessous.

**[Table. 1]**

| **Fonction** | **Ingrédients** | **Quantité (% poids)** | **Quantité préférée (% poids)** |
|---|---|---|---|
| Monomère polymérisable | 4-HBA | 20-50 | 25-45, pref. 35-40 |
| Diluant réactif | IBOA, TCCDA et/ou EHA | 20-50 | 30-40, pref. 35-40 |
| Tensioactifs à base de silicone | TEGORAD 2300, TEGORAD 2100, BYKUV 333 et/ou BYKUV 3510 | 0,5-2 | 0,5-2 |
| Photoinitiateurs | BAPO, TPO, DETX, TPO-L ou autres | Jusqu'à 20 | 5-15 |
| Inhibiteur de polymérisation | Genorad 16 ou autres | Jusqu'à 2 | 0,1-2 |
| co initateur de polymérisation | Genomer 5275 ou autres | Jusqu'à 10 | 2-6 |
| Pigments | Pigments | Jusqu'à 15 | 2-10, pref. 2-6 |
| Solvant | Alcool isobutylique ou autre | Jusqu'à 15 | 0 |
| Autres composants | | Jusqu'à 3 | 0 |
| TOTAL | | 100 | 100 |

### EXEMPLES

### Exemple 1 : Validation des diluants réactifs

Des essais ont été menés afin de valider l'ajout d'autres monomères d'acrylate dans la composition d'encre à base de 4-Hydroxybutyl Acrylate selon l'invention.

Les formules testées contiennent du 4-Hydroxybutyl Acrylate (4-HBA) seul, ou en mélange avec de l'acrylate d'isobornyle (IBOA), du 2-éthylhexyl acrylate (EHA) ou de l'alcool isobutylique. Chaque formule est complétée par un mélange de photoinitiateurs (BAPO, TPO, DETX, Genomer 5275) et de stabilisant (Genorad 16).

Les résultats sont présentés dans le tableau 2 ci-dessous.

**[Table. 2]**

| **Formule** | | | **01** | **02** | **03** | **04** | **05** | **06** | **07** |
|---|---|---|---|---|---|---|---|---|---|
| Ingrédient | T.S. mN/m | | | | | | | | |
| 4-HBA (%, poids) | 35 | | 82,7 | 62,7 | 42,7 | 62,7 | 42,7 | 62,7 | 42,7 |
| IBOA(%, poids) | 26 | | | 20 | 40 | | | | |
| EHA(%, poids) | 22,3 | | | | | 20 | 40 | | |
| Alcool isobutylique (%, poids) | 23 | | | | | | | 20 | 40 |
| | | T.S. (mN/m) | 36,59 | 33,56 | 31,34 | 30,92 | 28,95 | 30 | 30 |
| | | viscosité à 25°C (mPa.s) | 16,71 | 16,32 | 16,05 | 11,01 | 7 | 12,19 | 8,78 |
| Sensibilité au séchage UV | | Nombre de passage à 5 m/min | 1 | 1 | 1 | 1 | 2 | 2 | 4 |
| | | Nombre de passage à 10 m/min | 1 | 1 | 1 | 1 | 2 | 9 | 10 |
| | | Nombre de passage à 20 m/min | 1 | 1 | 1 | 2 | 4 | 10 | 10 |

Pour chaque formule, la viscosité, la tension de surface ainsi que la capacité de séchage aux UV sont mesurées.

On mesure initialement les tensions de surfaces du 4-HBA, de l'IBOA, de l'EHA et de l'alcool isobutylique avant mélange, puis celles de chaque mélange.

Les mesures de viscosités sont mesurées à l'aide d'un viscosimètre rotationnel (cone & plate viscometer) Anton Paar ViscoQC 300/PTD 100.

La sensibilité au séchage est évaluée comme suit : pour chaque formule une couche d'encre de 12 µm d'épaisseur est déposée sur une carte de contraste. Les cartes de contrastes sont passées, à l'aide d'un convoyeur à bande, sous une lampe UV (lampe Phoseon Firejet JF200 LED) qui émet à une longueur d'onde de 395 nm, à une puissance de 16 W/cm*2 (consigne de sortie de 100%), à différentes vitesses. Le séchage est évalué par passage d'un coton sur les cartes. Le nombre de passages sous la lampe pour obtenir un coton sans trace est noté.

On note que lorsque la formule ne comprend que du 4-hydroxybutyl acrylate (4 HBA), la tension de surface est trop élevée (formule 01). L'ajout d'un diluant réactif tel que l'acrylate d'isobornyle (IBOA), le 2-éthylhexyl acrylate (EHA) ou d'un solvant tel que l'alcool isobutylique, permet de diminuer la valeur de la tension de surface (formules 02 à 07). Cependant, on note également que les formules ne comprenant pas de diluant réactifs (formules 06 et 07) ne sont pas satisfaisante en termes de capacité de séchage aux UV.

### Exemple 2 : Sélection des tensioactifs

Des essais ont été menés afin de valider le choix des tensioactifs dans la composition d'encre selon l'invention. Les résultats sont présentés dans le Tableau 3 ci-dessous.

Les tensioactifs testés sont un tensioactif à base de diol acétylénique (Dynol 604) ; des tensioactifs à base de fluor (Capstone FS-22) et des tensioactifs à base de silicone (Tegorad 2300 et Tegorad 2100 (acrylate de silicone) ; BYKUV-333 et BYKUV-3510 (organopolysiloxane polyéther modifié). Le 4-Hydroxybutyl Acrylate (4 HBA) sans tensioactif est utilisé comme témoin.

Les essais consistent à déposer une goutte de 5 µL sur un support en polypropylène et sur un support représentatif de la peinture de base (Basecoat) typique des aéronefs (polyuréthane) puis à mesurer le diamètre de la goutte à différentes heures après la dépose.

La tension de surface est également mesurée.

Les résultats sont présentés dans le tableau 3 ci-dessous.

**[Table. 3]**

| | **4-HBA** | **Dynol 604** | **Capstone FS-22** | **BYKUV-333** | **Tegorad 2100** | **BYKUV-3510** | **Tegorad 2300** |
|---|---|---|---|---|---|---|---|
| | Wt% | 1 | 1 | 1 | 1 | 1 | 1 |
| T.S. (mN/m) | 35 | 35,7 | 33,9 | 21,8 | 23,1 | 20,3 | 19,5 |
| diamètre goutte sur film PP (S.E. = 30) (mm) | 3 | 3 | 3 | 5 | 4,5 | 7 | 7 |
| diamètre goutte sur basecoat (2h) (mm) | 3 | 3 | 4 | 4,5 | 5 | 4,5 | 5,5 |
| diamètre goutte sur basecoat (3h) (mm) | 3 | 3,5 | 3,5 | 4,5 | 5 | 4,5 | 5 |
| diamètre goutte sur basecoat (4h) (mm) | 3,5 | 4 | 4 | 4,5 | 5 | 4,5 | 5 |
| diamètre goutte sur basecoat (5h) (mm) | 4 | 4 | 4 | 4,5 | 5 | 5 | 5 |
| diamètre goutte sur basecoat (6h) (mm) | 4 | 4 | 4 | 5 | 5 | 5 | 5 |
| diamètre goutte sur basecoat (>72h) (mm) | 5,5 | 5 | 5,5 | 5 | 4 | 6 | 7 |

On relève que les tensioactifs à base de silicone sont les plus efficaces sur le film de polypropylène et sur la peinture de base dès 2h après la dépose de la goutte. Les tensions de surface mesurées sont également les plus satisfaisantes. Les résultats observés concernant les tensioactifs à base de diol acétylénique (Dynol 604) et à base de fluor (Capstone FS-22) ne sont pas satisfaisants (valeurs grisées dans le tableau).

### Exemple 3 : Test de mouillabilité

Des essais ont été menés afin d'évaluer la mouillabilité d'une composition d'encre selon l'invention. Dans ces essais, les formulations ont été réalisées sans pigments, et en présence ou en absence de tensioactifs.

Pour ce faire, un film d'encre d'épaisseur de 6µm est déposé via un applicateur de film sur une peinture de base en polyuréthane (basecoat) après 2 h, 4h ou 6h de séchage de la peinture de base. Le résultat est mesuré qualitativement (aspect du film).

Les résultats sont présentés dans le tableau 4 ci-dessous.

**[Table. 4]**

| | **01** | **02** | **03** | **04** | **05** | **06** | **07** | **08** |
|---|---|---|---|---|---|---|---|---|
| 4-HBA | 82,70 | 81,70 | 81,70 | 42,70 | 41,70 | 41,70 | 62,70 | 61,70 |
| IBOA (diluant réactif) | | | | 40,00 | 40,00 | 40,00 | | |
| EHA (diluant réactif) | | | | | | | 20,00 | 20,00 |
| BAPO (photoinitiateur) | 3,00 | 3,00 | 3,00 | 3,00 | 3,00 | 3,00 | 3,00 | 3,00 |
| TPO (photoinitiateur) | 5,00 | 5,00 | 5,00 | 5,00 | 5,00 | 5,00 | 5,00 | 5,00 |
| DETX (photoinitiateur) | 5,00 | 5,00 | 5,00 | 5,00 | 5,00 | 5,00 | 5,00 | 5,00 |
| Genomer 5275 (co-initiateur) | 4,00 | 4,00 | 4,00 | 4,00 | 4,00 | 4,00 | 4,00 | 4,00 |
| Genorad 16 (inhibiteur de polymérisation) | 0,30 | 0,30 | 0,30 | 0,30 | 0,30 | 0,30 | 0,30 | 0,30 |
| BYKUV-3510 (tensioactif) | | 1,00 | | | 1,00 | | | 1,00 |
| Tegorad 2300 (tensioactif) | | | 1,00 | | | 1,00 | | |
| | | | | | | | | |
| S.T. (mN/m) | 36,59 | 20,59 | 19,54 | 31,34 | 22,54 | 21,81 | 30,92 | 20,87 |
| viscosité à 25°C (mPa.s) | 16,71 | 15,57 | 16,77 | 16,05 | 15,49 | 17,59 | 11,01 | 12 |
| Film de 6 µm déposé sur basecoat (2h) | NOK | **OK** | **OK** | NOK | **OK** | **OK** | NOK | n.d. |
| Film de 6 µm déposé sur basecoat (4h) | NOK | **OK** | **OK** | NOK | **OK** | **OK** | NOK | n.d. |
| Film de 6 µm déposé sur basecoat (6h) | NOK | **OK** | **OK** | OK | **OK** | **OK** | **OK** | **OK** |

On relève qu'en l'absence de tensioactifs, les résultats des tests de mouillabilité ne sont pas satisfaisants.

### Exemple 4 : Evaluation des compositions d'encre selon les modes préférés de l'invention

Des essais ont été menés afin de valider la sensibilité au séchage par UV, la viscosité, ainsi que la granulométrie à l'état initial et après vieillissement des compositions selon l'invention.

Les résultats sont présentés dans le tableau 5 ci-dessous.

**[Table. 5]**

| | **Formules** | **01** | **02** | **03** | **04** | **05** | **06** | **07** | **08** | **09** |
|---|---|---|---|---|---|---|---|---|---|---|
| | 4-HBA | 26,68 | 26,33 | 32,52 | 26,33 | 26,68 | 26,33 | 26,68 | 26,33 | 18 |
| | IBOA (diluant réactif) | 38,35 | 38 | 32,51 | 38 | 38,35 | 38 | 38,35 | 38 | 38 |
| | BAPO (photoinitiateur) | 3 | | 3 | | 3 | | 3 | | |
| | TPO (photoinitiateur) | 5 | | 5 | | 5 | | 5 | | |
| | DETX (photoinitiateur) | 5 | 2 | 5 | 2 | 5 | 2 | 5 | 2 | 2 |
| | TPO-L (photoinitiateur) | | 10 | | 10 | | 10 | | 10 | 10 |
| | Genomer 5275 (co-initiateur) | 4 | 5 | 4 | 5 | 4 | 5 | 4 | 5 | 5 |
| | Genorad 16 (inhibiteur de polymérisation) | 0,3 | 1 | 0,3 | 1 | 0,3 | 1 | 0,3 | 1 | 1 |
| | Tegorad 2300 (tensioactif) | 1 | 1 | 1 | 1 | 1 | 1 | 1 | 1 | 1 |
| | Dispersion pigmentaire | 16,67 | 16,67 | | | | | | | |
| | (15% pigments cyans) | | | | | | | | | |
| | Dispersion pigmentaire (15% % de pigments jaunes) | | | 16,67 | 16,67 | | | | | |
| | Dispersion pigmentaire (15% de pigments magenta) | | | | | 16,67 | 16,67 | | | |
| | Dispersion pigmentaire (15% de pigments noirs) | | | | | | | 16,67 | 16,67 | |
| | Dispersion pigmentaire (10% de pigments noirs) | | | | | | | | | 25 |
| | **Total** | **100** | **100** | **100** | **100** | **100** | **100** | **100** | **100** | **100** |
| | | | | | | | | | | |

| **Analyses** | | | | | | | | | | |
|---|---|---|---|---|---|---|---|---|---|---|
| Sensibilité au séchage UV (12 µm carte de contraste Leneta) nombre de passages pour séchage complet, avec lampe 395 nm LED (16 W/cm*2) 100% | 15 m/min | 1 | 1 | 1 | 1 | 1 | 1 | 1 | 1 | n.d |
| | 10 m/min | 1 | 1 | 1 | 1 | 1 | 1 | 1 | 1 | n.d |
| | 5 m/min | 1 | 1 | 1 | 1 | 1 | 1 | 1 | 1 | n.d |
| | | | | | | | | | | |
| % séchage - 1 passage avec lampe 395 nm LED (12 W/cm*2) | 15 m/min 25 % | 92,2 | 96,3 | 93,7 | 93,9 | 97,6 | 96,6 | 93,4 | 90,4 | n.d |
| | 5 m/min 100 % | 93,1 | 96,9 | 95,3 | 95,6 | 99,1 | 97,8 | 99,1 | 98,1 | n.d |
| | | | | | | | | | | |
| Viscosité (mPa.s) à 25°C | Initialement | 20 | 19,5 | 22,3 | 21,8 | 21,2 | 22,4 | 20,8 | 20,9 | 23,4 |
| | Après 7 jours à 80°C | 18 | 16,6 | 19,62 | 18,44 | 18 | 18,31 | 18,7 | 20,32 | 23,7 |
| | % changement | -10 | -15,1 | -12,2 | -15,5 | -15,2 | -18,3 | -10,3 | -2,7 | 1,3 |
| | Après 7 jours à 60°C | ok | ok | ok | ok | ok | ok | ok | ok | ok |
| | | | | | | | | | | |
| Taille des particules | D50 initial | 120 | 115 | 130,8 | 127,1 | 125,7 | 123 | 147,8 | 153 | 141,1 |
| | D90 initial | 173,1 | 184 | 211 | 197,3 | 253 | 238,3 | 214,4 | 184,1 | 205,9 |
| mesurées par diffusion dynamique de lumière (DLS) (nm) | D50 à 7jours à 80°C | 122,6 | 103,4 | 119 | 125,1 | 117,2 | 116,3 | 172,7 | 194 | 194 |
| | D90 à 7jours à 80°C | 161,7 | 166,3 | 178,9 | 194,2 | 213,4 | 219,6 | 308,7 | 312 | 295 |

La sensibilité au séchage et les mesures de viscosités sont réalisées comme décrites dans l'exemple 1.

Pour chaque formule, la viscosité, la sensibilité au séchage et la distribution granulométrique sont conformes aux attentes.

## Revendications

1. Composition d'encre durcissable par rayonnements ultraviolet ou par rayonnements de faisceaux d'électrons, **caractérisée en ce qu'**elle comprend :
- entre 20 et 50 % de 4-hydroxybutyl acrylate,
- entre 20 et 50 % d'un diluant réactif choisi parmi l'acrylate d'isobornyle, le diacrylate tricyclodécane diméthanol, le 2-éthylhexyl acrylate ou l'un de leurs mélanges,
- entre 0,5 et 2 % d'au moins un tensioactif à base de silicone,
- jusqu'à 20% d'au moins un photoinitiateur,
- jusqu'à 15 % de pigments,
en poids par rapport au poids total de la composition.

2. Composition selon la revendication 1, **caractérisée en ce qu'**elle comprend entre 25 et 45 %, préférentiellement entre 35 et 40%, de 4-hydroxybutyl acrylate, en poids par rapport au poids total de la composition.

3. Composition selon l'une des revendications précédentes, **caractérisée en ce qu'**elle comprend entre 30 et 40 %, préférentiellement entre 35 et 40%, de diluant choisi parmi l'acrylate d'isobornyle, le diacrylate tricyclodécane diméthanol, le 2-éthylhexyl acrylate, ou l'un de leurs mélanges, en poids par rapport au poids total de la composition.

4. Composition selon l'une des revendications précédentes, **caractérisée en ce que** le diluant réactif est l'acrylate d'isobornyle.

5. Composition selon l'une des revendications précédentes, **caractérisée en ce que** le tensioactif à base de silicone est un acrylate de silicone ou un polysiloxane polyéther modifié.

6. Composition selon l'une des revendications précédentes, **caractérisée en ce qu'**elle comprend, de plus, jusqu'à 10 %, préférentiellement entre 2 et 6 %, d'au moins un co initateur de polymérisation, en poids par rapport au poids total de la composition.

7. Composition selon la revendication 6, **caractérisée en ce que** le co initateur de polymérisation est une amine acrylée.

8. Composition selon l'une des revendications précédentes, **caractérisée en ce qu'**elle comprend entre 5 et 15 % d'au moins un photoinitiateur, en poids par rapport au poids total de la composition

9. Composition selon l'une des revendications précédentes, **caractérisée en ce qu'**elle comprend entre 2 et 10 % de pigments, préférentiellement entre 2 et 6 %, en poids par rapport au poids total de la composition.

10. Composition selon l'une des revendications précédentes, **caractérisée en ce qu'**elle comprend, de plus, jusqu'à 2 %, préférentiellement, entre 0,1 et 2 %, d'au moins un inhibiteur de polymérisation, en poids par rapport au poids total de la composition.

11. Composition selon l'une des revendications précédentes, **caractérisée en ce qu'**elle comprend jusqu'à 15 %, d'au moins un solvant non réactif, préférentiellement l'isobutanol, en poids par rapport au poids total de la composition.
